Europäisches Patentamt

European Patent Office

Office européen des brevets

(11) Veröffentlichungsnummer: **0 090 234**
**B1**

## EUROPÄISCHE PATENTSCHRIFT

(45) Veröffentlichungstag der Patentschrift: **30.09.87**

(51) Int. Cl.⁴: **B 03 D 1/14**, D 21 F 1/70

(21) Anmeldenummer: **83102465.8**

(22) Anmeldetag: **12.03.83**

(54) Injektor für Flotationsapparate.

(30) Priorität: **31.03.82 DE 3211906**

(43) Veröffentlichungstag der Anmeldung:
**05.10.83 Patentblatt 83/40**

(45) Bekanntmachung des Hinweises auf die
Patenterteilung:
**30.09.87 Patentblatt 87/40**

(84) Benannte Vertragsstaaten:
**AT BE CH DE FR GB IT LI NL SE**

(56) Entgegenhaltungen:
**DE-A-2 700 049**
**FR-A- 998 240**
**FR-A-2 315 988**
**FR-A-2 484 862**
**GB-A- 972 428**
**GB-A-2 102 308**
**NL-A-7 609 275**
**US-A-3 243 046**
**US-A-3 400 818**
**US-A-4 098 851**

(73) Patentinhaber: **J.M. Voith GmbH**
**Postfach 1940 St. Pöltener Strasse 43**
**D-7920 Heidenheim (DE)**

(72) Erfinder: **Schweiss, Peter**
**Gartenstrasse 29**
**D-7915 Elchingen (DE)**
Erfinder: **Dörflinger, Hans-Dieter**
**Iglauer Strasse 47**
**D-7920 Heidenheim (DE)**

Courier Press, Leamington Spa, England.

## Beschreibung

Die Erfindung betrifft einen Injektor entsprechend dem Oberbegriff des Patentanspruchs 1.

Ein solcher Injektor ist bekanntgeworden aus NL—A—7609275. Hierbei ist als Verengungsstelle die bekannte Laval-Düse vorgesehen, in die ein zentrales Luftzufuhrrohr hineingeführt ist, das jedoch inmitten der ziemlich lang ausgeführten Verengungsstelle im engsten Bereich endet.

Durch DE—A—27 00 049 ist eine Beschleunigungsdüse, die den Suspensionsstrom führt, als Injektor vorgesehen, die die Luft aus einem seitlichen Kanal, der mit der Atmosphäre in Verbindung steht, ansaugt. An diese Düse und Ansaugstelle schließt sich eine Mischstrecke an, die sich allmählich, gleichmäßig kegelstumpfförmig verengt und danach sich wieder diffusorförmig erweitert.

Durch FR—A—998 240 ist eine sich abrupt nach einer als Düse ausgebildeten Verengungsstelle erweiternde Mischstrecke vorgesehen, wobei an den Düseneingang Druckluft zentral in Strömungsrichtung eingeleitet wird.

Bei dem Injektor nach der DE—A—2 701 702 wird in einem einem Flotationsbehälter vorgeschalteten Behälter ein Gemisch aus einer Flüssigkeit z.b. einer Suspension und Gas, z.B. Luft vorbereitet, ehe dieses dann der eigentlichen Flotationszelle zugeführt wird. Bei diesem Injektor sind zwei hintereinander geschaltete Drosselstellen vorgesehen, jedoch ist die zweite Drosselstelle unabhängig vom Injektor angeordnet und mit diesem über eine Regeleinrichtung gekoppelt, welche die ganze Apparatur etwas kompliziert und in gewisser Weise auch störanfällig macht, was sie schon aus diesem Grunde an sich nicht gut geeignet für die Flotation von Großanlagen erscheinen läßt. Darüber hinaus scheint diese Einrichtung nur zu funktionieren, wenn der Injektor mit nachgeschalteter Mischstrecke im wesentlichen senkrecht in den Behälter eintaucht. Auch dies ist ein Umstand, der die Apparatur für den Einsatz in äußerst groß dimensionierten Flotationsbehältern, z.B. von Deinking-Anlagen der Papierindustrie, als ungeeingnet erscheinen läßt.

Die Aufgabe der Erfindung ist es, einen einfach aufgebauten Injektor zu schaffen, der insbesondere für Großapparate geeignet ist. Es soll dabei einen guten Wirkungsgrad aufweisen, d.h. insbesondere auch die Durchmischung der zu flotierenden Suspension mit feinsten Gasbläschen optimal ermöglichen.

Diese Aufgabe wir erfindungsgemäß bei einem Injektor der eingangs genannten Art durch die Merkmale des kennzeichnenden Teils des Patentanspruchs 1 gelöst.

Vorteilhafte Ausgestaltungen ergeben sich aus den abhängigen Ansprüchen.

Nachfolgend wird die Erfindung anhand eines in der Zeichnung dargestellten Ausführungsbeispiels erläutert.

Dabei zeigt

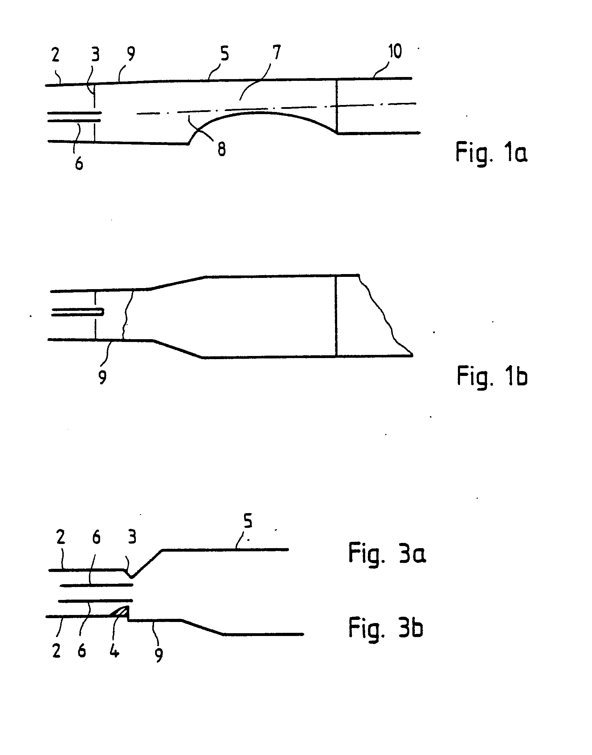

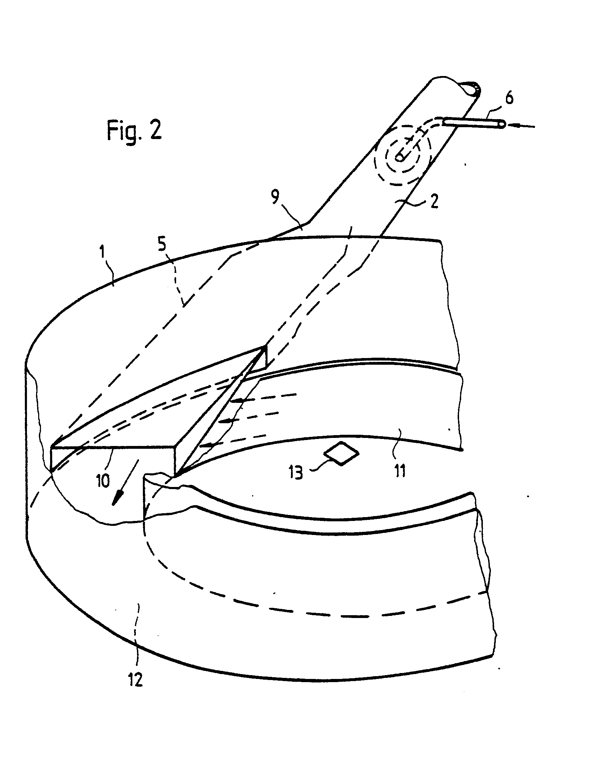

Figur 1 a und b den Injektor gemäß der Erfindung im Längsschnitt in Vertikal- und Horizontal-Richtung,

Figur 2 die Injektoranordnung mit einem vertikal angeordneten, runden, d.h. zylindrischen Flotationsbehälter und

Figur 3 eine andere Ausführungsform des Injektors.

Die zu flotierende Suspension wird in den Flotationsbehälter 1 durch den Injektor mit feinsten Gasbläschen durchmischt zugeführt. Dieser Injektor weist zunächst ein kreiszylindrisches Zufuhrrohr 2 für die Suspension auf. Es endet in einer Blende 3 oder einer nicht erweiterten Düse 4. Wichtig ist für die Funktion des Injektors, daß diese Verengungsstellen, die sich am Anfang der Mischstrecke 5 befinden, abrupt zur Mischstrecke 5 erweitern. Das Zufuhrrohr 6 für das Gas, d.h. für die Luft, ist zentral im letzten Abschnitt des Zufuhrrohrs 2 für die Suspension und zentral durch die Verengungsstelle, d.h. die Blende oder die Düse ein kurzes Stück in die Mischstrecke 5 hineingeführt.

Die Mischstrecke 5 besteht im wesentlichen aus einem rechteckigem Kasten mit einem kreiszylinderförmigen Eintrittsteil 9. Dabei weist der Kasten eine zweite Verengungsstelle 7 auf. Diese Verengungsstelle ist unsymetrisch zu gedachten Mittellinie 8 der Mischstrecke 5 angeordnet. Wesentlich für sie ist die diffusorartige Erweiterung hinter dem engsten Querschnitt dieser Verengungsstelle 7. Durch diese zweite Verengungsstelle 7 wird eine Vergleichmäßigung des Strömungsprofiles erreicht, so daß Wirkung des Diffusorteils der Mischstrecke 5 optimal erfolgt, d.h. man erzielt die größtmögliche Durcksteigerung der Strömung.

Man erkennt dann aus Figur 2, daß sich an die Mischstrecke 5 ein kastenförmiges Einströmteil 10 des Injektors anschließt. Dieses Teil 10 ist etwa tangential an den Flotationsbehälter 1 angeschlossen. Dabei endet es an einem inneren, konzentrisch im Behälter 1 angeordneten Führungszylinder 11. Ferner erkennt man aus Figur 2 eine seitliche Öffnung an der radial inneren Wandung des Kasten 10, die im unteren Teil desselben angeordnet ist. Hierdurch kommt es zu einer Durchmischung der frisch einströmenden Suspension mit der Strömung in dem Flotationsbehälter 1. Es hat sich gezeigt, daß ein solche Anordnung besonders günstig für den Flotationseffekt ist. Es ist noch nicht weiter dargestellt, daß die Suspension in einer schraubenlinienförmigen Bewegung in dem Flotationsbehälter im äußern Ringraum 12 zunächst nach oben strömt, wo der gebildete Flotationsschaum abgezogen wird, und das danach die Strömung wieder sich nach unten zu am Boden des Flotationsbehälters 1 befindlichen Abzugsöffnung 13 für die gereinigte Suspension richtet.

Es hat sich die dargestellte Ausführungsform mit den rechteckigen Querschnitten als besonders günstig erwiesen. Es kommt jedoch auch ein runder z.B. ein elyptischer Querschnitt in Frage.

Ebenso kann die unsymetrisch liegende zweite Verengungsstelle 7 auch im Verhältnis zu Horizontal-Richtung unsymetrisch in der Mischstrecke 5 angeordnet sein.

Die Verengungsstelle 7 hat den Sinn, das Strömungsprofil hinter der ersten Verengungsstelle 3, 4 zu vergleichmäßigen. Dadurch, daß si unsymmetrisch angeordnet ist, braucht sie nicht einen zu kleinen, lichten Querschnitt aufweisen, so daß der nachgeschaltete Diffusor recht kurz ausgeführt werden kann.

Machte man die Verengungsstelle bei symmetrischer Anordnung derselben sehr eng, um das gleiche gleichmäßige Geschwindigkeitsprofil der Strömung zu erzielen, müßte der Diffusorteil entsprechend lang ausgeführt werden.

Es hat sich als günstig herausgestellt, wenn das Gaszufuhrrohr 6 etwa 50—70 mm hinter der engsten Stelle in der Mischstrecke 5 endet. Dabei hat das Zufuhrrohr einen Durchmesser von 200 mm und das Übergangsstück 9 maximal einen solchen von 250 mm φ. Die Durchmesser könnten aber z.B. auch gleich sein. Die absolute Größe aller Querschnitte wird durch den angestrebten Luftdurchsatz und den Austrittsdruck bestimmt.

## Patentansprüche

1. Flotationsapparat mit zur Einführung eines Gas-Flüssigkeits-Gemischs in den Flotationsapparat dienenden Injektor, wobei der Injektor eine Verengungsstelle und eine dieser nachgeschaltete Mischstrecke (5) sowie ein zentral in die Verengungsstelle geführtes Gaszufuhrrohr aufweist, gekennzeichnet durch die folgenden Merkmale des Injektors:

a) die Verengungsstelle (3, 4) erweitert sich abrupt zur Mischstrecke (5),

b) das zentral geführte Gaszufuhrrohr (6) endet kurz hinter der Verengungsstelle (3, 4) in der Mischstrecke (5),

c) die Mischstrecke (5) weist eine zweite, sich diffusorartig erweiternde Verengungsstelle (7) auf.

2. Flotationsapparat nach Anspruch 1, dadurch gekennzeichnet, daß die zweite Verengungsstelle (7) unsymmetrisch zur Mittelachse (8) der ohne Verengungsstelle (7) gedachten Mischstrecke (5) liegt.

3. Flotationsapparat nach Anspruch 1 oder 2, dadurch gekennzeichnet, daß die Mischstrecke ein kreiszylindrisches Anfangsteil (9) und ein anschließendes, dieses mit einem Anschlußteil von rechteckigem Querschnitt verbindendes Übergangsteil aufweist, in dem die zweite Verengungsstelle (7) vorgesehen ist.

4. Flotationsapparat nach einem der Ansprüche 1 bis 3, dadurch gekennzeichnet, daß die erste Verengungsstelle eine Blende (3) oder nicht erweiterte norm- oder Viertelkreisdüse (4) ist.

5. Flotationsapparat nach einem der Ansprüche 1 bis 4, dadurch gekennzeichnet, daß die zweite Verengungsstelle (7) in der Mischstrecke (5) unsymmetrisch in bezug auf die Vertikale liegt.

6. Flotationsapparat nach einem der Ansprüche 1 bis 5, dadurch gekennzeichnet, daß der Injektor über einen an die Mischstrecke (5) anschließenden Anschlußkasten (10) mit im wesentlichen rechteckigem Querschnitt an dem vertikal angeordneten, kreiszylindrisch ausgebildeten Flotationsbehälter (1) mit im wesentlichen kreisförmigen Horizontal-Querschnitt angeschlossen ist, wobei die radial innere Wandung des Anschlußkastens (10) durch eine Öffnung unterbrochen ist und an einem koaxial im Flotationsbehälter (1) liegenden Leitzylinder (11) endet.

7. Flotationsapparat nach einem der Ansprüche 1 bis 6, dadurch gekennzeichnet, daß der Anschluß des Injektors an den Flotationsbehälter (1) in Bodennähe desselben und im wesentlichen tangential vorgesehen ist.

## Revendications

1. Dispositif de flottation avec injecteur servant à introduire un mélange de gaz et liquide dans ce dispositif de flottation. Dans ce cas, l'injecteur présente un endroit de retrecissement et un parcours de mélange (5) placé en aval ainsi qu'un tuyau d'alimentation pour le gaz amené de façon centrale dans l'endroit de retrecissement. Ce dispositif est caractérisé par les caractéristiques de l'injecteur suivantes:

a) l'endroit de retrecissement (3, 4) s'élargit brusquement vers le parcours de mélange (5).

b) le tuyau d'alimentation pour le gaz, amené de façon centrale, se termine peu aprés l'endroit de retrecissement (3, 4) dans le parcours de mélange (5).

c) le parcours de mélange (5) présente un deuxiéme endroit de retrecissement (7) qui s'élargit comme un diffuseur.

2. Dispositif de flottation selon la revendication 1, caractérisé par le fait que ce deuxième endroit de retrecissement (7) se situe de manière asymétrique par rapport à l'axe central du parcours de mélange (5) conçu sans endroit de retrecissement (7).

3. Dispositif de flottation selon la revendication 1 ou 2 caractérisé par le fait que le parcours de mélange présente une partie initial 9 cylindrique circulaire et une partie de transfert reliant la partie initiale avec une pièce de raccordement d'une section transversale rectangulaire. Le deuxième endroit de retrecissement 7 a été prévu dans la partie du transfert.

4. Dispositif de flottation selon une des revendications 1 à 3, caractérisé par le fait que le premier endroit de retrecissement est un écran (3) ou une tuyère d'écoulement ou de quart de cercle non élargie.

5. Dispositif de flottation selon une des revendications 1 à 4, caractérisé par le fait que le deuxième endroit de retrecissement (7) se situe de façon asymétrique dans le parcours de mélange (5) par rapport à la verticale.

6. Dispositif de flottation selon une des revendications 1 à 5, caractérisé par le fait que l'injecteur est relié au récipient de flottation (1), disposé de façon verticale et formé de façon cylindrique circulaire, avec une section transversale dans le plan horizontal en principe circulaire, au moyen d'une boîte de jonction qui suit le parcours de mélange 5 et présente une coupe transversale en principe rectangulaire. Dans ce cas, la paroi intérieure radiale de la boîte de jonction (10) est interrompue par une ouverture et se termine sur un cyclindre-guide (11) situé de façon co-axiale dans le récipient de flottation (1).

7. Dispositif de flottation selon une des revendications 1 à 6, caractérisé par le fait que la connexion de l'injecteur sur le récipient de flottation (1) est prévue à proximité du fond de celui-ci et en principe de façon tangentielle.

**Claims**

1. Flotation apparatus having an injector serving to introduce a mixture of gas and fluid into the flotation apparatus, the injector having a constriction and a mixing section (5) behind this and also a gas intake guided centrally into the constriction, characterised by the following features of the injector:

a) the constriction (3, 4) widens abruptly towards the mixing section (5),

b) the centrally guided gas intake (6) ends a short distance behind the constriction (3, 4) in the mixing section (5),

c) the mixing section (5) has a second constriction (7) widening like a diffusor.

2. Flotation apparatus according to Claim 1, characterised in that the second constriction (7) is asymmetrical to the centre axis (8) of the mixing section (5) as it would be without a constriction (7).

3. Flotation apparatus according to Claim 1 or 2, charcterised in that the mixing section has a circular cylindrical initial part (9) and a subsequent transitional part connecting this to a connecting part having a rectangular cross section, in which the second constriction (7) is provided.

4. Flotation apparatus according to one of Claims 1 to 3, characterised in that the first constriction is a diaphragm (3) or a standard or quandrant nozzle (4) which is not extended.

5. Flotation apparatus according to one of Claims 1 to 4, characterised in that the second constriction (7) in the mixing section (5) is asymmetrical in relation to the vertical.

6. Flotation apparatus according to one of Claims 1 to 5, characterised in that the injector is connected, via a connecting box (10) connecting to mixing section (5) and having a substantially rectangular cross section, to the vertically arranged flotation tank (1) constructed as a circular cylinder and having an essentially circular horizontal cross section, the radially inner wall of the connecting box (10) being interrupted by an aperture and ending at a guide cylinder (11) lying coaxially in the flotation tank (1).

7. Flotation apparatus according to one of Claims 1 to 6, characterised in that the connection of the injector to the flotation tank (1) is effected in the vicinity of the base thereof and substantially tangentially.

Fig. 1a

Fig. 1b

Fig. 3a

Fig. 3b

Fig. 2